(19) Europäisches Patentamt
European Patent Office
Office européen des brevets

(11) **EP 3 667 401 A1**

(12) **EUROPEAN PATENT APPLICATION**

(43) Date of publication:
**17.06.2020 Bulletin 2020/25**

(51) Int Cl.:
***G02C 7/02*** *(2006.01)*   ***B29D 11/00*** *(2006.01)*
***B23K 26/53*** *(2014.01)*   *G02B 5/18* *(2006.01)*
*G02C 7/10* *(2006.01)*

(21) Application number: **18306678.6**

(22) Date of filing: **12.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Essilor International
94220 Charenton-Le-Pont (FR)**

(72) Inventors:
• **MAURICE, Sebastien
94220 Charenton-le-Pont (FR)**

• **DUBOIS, Frédéric
94220 Charenton-le-Pont (FR)**
• **CALLIER, Benoit
94220 Charenton-le-Pont (FR)**
• **DELOISON, Florent
33400 Talence (FR)**
• **CHASSAGNE, Bruno
33400 Talence (FR)**
• **JAVAUX-LEGER, Clémentine
33400 Talence (FR)**
• **ANCELOT, Bastien
33400 Talence (FR)**

(74) Representative: **Cabinet Novitech
188 Grande rue Charles de Gaulle
94130 Nogent-sur-Marne (FR)**

(54) **METHOD AND DEVICE FOR MANUFACTURING AN OPHTHALMIC LENS**

(57)     A method and a device for manufacturing an ophthalmic lens intended to be placed in front of an eye of a wearer, the ophthalmic lens having a desired optical function comprising a dioptric function adapted to a prescription of the wearer, the method comprising:
- providing an optical element made of a first material having a first refractive index, the optical element being intended to be modified to manufacture the ophthalmic lens,

- providing data relative to the modification of the optical element enabling to obtain the desired optical function,
- determining at least one zone in the first material based on data, and
- modifying the refractive index of the first material in the determined zone with focused femtosecond laser pulses according to data so as to obtain an ophthalmic lens having the desired optical function.

Figure 1

EP 3 667 401 A1

**Description**

The present invention relates to a method for manufacturing an ophthalmic lens intended to be placed in front of an eye of a wearer and to a corresponding device. The invention further relates to an ophthalmic lens manufactured by the device and/or according to the method.

An ophthalmic lens is typically made of plastic or glass material and generally has two opposing surfaces which co-operate to provide a required corrective prescription.

Manufacturing of an ophthalmic lens to the required prescription requirements typically includes machining a face of a semi-finished lens. Typically, a semi-finished lens has a finished face, for example the front face and an unfinished face, for example the back face. By machining the back face of the lens to remove material, the required shape and positioning of the surface of the back face with respect to the surface of the front face for the desired corrective prescription can be generated.

A goal of the present invention is to provide an alternative to classical method for manufacturing an ophthalmic lens.

To this end, the invention proposes a method for manufacturing an ophthalmic lens intended to be placed in front of an eye of a wearer, the ophthalmic lens having a desired optical function comprising a dioptric function adapted to a prescription of the wearer, the method comprising:

- providing an optical element made of a first material having a first refractive index, the optical element being intended to be modified to manufacture the ophthalmic lens,
- providing data relative to the modification of the optical element enabling to obtain the desired optical function,
- determining at least one zone in the first material based on data, and
- modifying the refractive index of the first material in the determined zone with focused femtosecond laser pulses according to data so as to obtain an ophthalmic lens having the desired optical function.

Advantageously, such a method according to the invention allows a functionalizing internal marking that is to say, a marking in the mass that will create an optical function or add an additional optical function to the optical element, using laser marking generating a change of the index of the material.

According to further embodiments which can be considered alone or in combination:

- the data comprise:

  • data relative to variation of spherical, cylinder and/or prismatic power to be applied to the optical element, and/or
  • data relative to variation of the optical design to be applied to the optical element, and/or
  • data relative to an additional dioptric function to be applied to the optical element;

- the modifying step comprises a pattern forming step, wherein a pattern is formed in the determined zone of the first material by the focusing of the femtosecond laser pulses in the determined zone;
- the pattern comprises superimposed Fresnel layers;
- the pattern comprises an interferential element, preferably an antireflective coating or a reflective coating or an hologram or an optical waveguide;
- the optical element is an initial ophthalmic lens having an initial optical function adapted to a previous prescription of the wearer and the refractive index of the first material is modified so as to obtain an ophthalmic lens having the desired optical function adapted to the current prescription of the wearer;
- the method further comprises:

  • determining the optical element;
  • determining data relative to the modification of the optical element enabling to obtain the desired optical function based at least on the measurement so as to obtain an ophthalmic lens having a dioptric function adapted to the prescription to 0.25 Diopters or less than 0.25 Diopters;

- the optical element is a semi-finished lens blank or a lens blank comprising a front face and a back face opposed to the front face, the back face being the face intended to be the closest to the wearer's eye when the ophthalmic lens is placed in front of the wearer's eye;
- during the modifying step, the femtosecond laser pulses are focused in the determined zone through the front face of the optical element;
- the determined zone is a tridimensional zone defining a plurality of layers wherein the refractive index is modified during the modifying step, each layer being substantially parallel to the front face and localized at an average distance from the front face, and during the modification step, the refractive index of the first material in the determined zone is successively modified with focused femtosecond laser pulses from the most distant layers of the front face to the least distant layers of the front face;
- the wavelength of the femtosecond laser pulses is comprised between 500 nm and 550 nm, preferably between 510 nm and 520 nm, advantageously equal to 515 nm;
- the size of the focused femtosecond laser pulses is comprised between 0,5 $\mu$m and 1,5 $\mu$m;
- the method further comprises:

  • providing a first ophthalmic lens having a first optical function and comprising a first face and a second face opposed to the first face, the second face being the face intended to be the closest to the wearer's eye when the first ophthalmic lens is placed in front of the wearer's eye; and

• after the modifying step, adding the modified optical element to the first ophthalmic lens so as to form the ophthalmic lens having a desired optical function adapted to the wearer;

wherein the modified optical element is the optical element wherein the refractive index of the first material in the determined zone is modified with focused femtosecond laser pulses according to data.

The invention further relates to an ophthalmic lens intended to be placed in front of an eye of a wearer, the ophthalmic lens having a desired optical function comprising a dioptric function adapted to a prescription of the wearer and being manufactured from an optical element made of a first material having a first refractive index by modifying the refractive index with focused femtosecond laser pulses so as to obtain the ophthalmic lens having the desired optical function.

According to a preferred embodiment, the ophthalmic lens is manufactured according to a method of manufacturing according to the invention and as described hereinbefore.

Another object of the invention relates to an apparatus for manufacturing an ophthalmic lens intended to be placed in front of an eye of a wearer, the ophthalmic lens having a desired optical function comprising a dioptric function adapted to a prescription of the wearer, the apparatus comprising:

- means for providing an optical element made of a first material having a first refractive index, the optical element being intended to be modified to manufacture the ophthalmic lens,
- means for providing data relative to the modification of the optical element enabling to obtain the desired optical function,
- means for determining at least one zone in the first material based on data, and
- means for modifying the refractive index of the first material in the determined zone with focused femtosecond laser pulses according to data so as to obtain an ophthalmic lens having the desired optical function.

According to a preferred embodiment, the apparatus is adapted to implement a method of manufacturing according to the invention and as described hereinbefore.

According to a further aspect, the invention further relates to a device comprising a processor adapted to store one or more sequence of instructions and to carry out at least one of the steps of the method according to the invention.

More particularly, the invention relates to a computer program product comprising one or more stored sequences of instructions that are accessible to a processor and which, when executed by the processor, causes the processor to carry out at least the following steps of the method according to the invention:

- providing an optical element made of a first material having a first refractive index, the optical element being intended to be modified to manufacture the ophthalmic lens,
- providing data relative to the modification of the optical element enabling to obtain the desired optical function,
- determining at least one zone in the first material based on data, and
- controlling a femtosecond laser for modifying the refractive index of the first material in the determined zone with focused femtosecond laser pulses according to data so as to obtain an ophthalmic lens having the desired optical function.

The invention further relates to a computer readable medium carrying one or more sequences of instructions of the computer program product according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Embodiments of the invention will now be described, by way of example only, and with reference to the following drawings in which:

- Figure 1 is schematic view of a device for manufacturing an ophthalmic lens from an optical element according to the invention;
- Figure 2 is a flowchart of the steps of an embodiment of the method for manufacturing an ophthalmic lens according to the invention;
- Figure 3 is a flowchart of the steps of another embodiment of the method for manufacturing an ophthalmic lens according to the invention;
- Figure 4 illustrates an example of an ophthalmic lens manufactured according to an embodiment of the invention; and
- Figure 5 illustrates an example of an ophthalmic lens manufactured according to an embodiment of the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

A first aspect of the invention relates to an ophthalmic lens intended to be placed in front of an eye of a wearer and having a desired optical function comprising a dioptric function adapted to a prescription of the wearer.

In the sense of the invention, an optical function corresponds to a function providing for each gaze direction the effect of an ophthalmic lens on the light ray passing through the optical lens.

The optical function may comprise dioptric function, light absorption, polarizing capability, reinforcement of contrast capacity, etc...

The dioptric function corresponds to the optical lens power (mean power, astigmatism, the prismatic deviation, etc...) as a function of the gaze direction.

In the sense of the invention, the prescription is a set of optical characteristics of optical power, of astigmatism and, where relevant, of addition, determined by an ophthalmologist in order to correct/compensate the vision defects of an individual, for example by means of a lens positioned in front of his eye. Generally speaking, the prescription for a progressive addition lens comprises values of optical power and of astigmatism at the distance-vision point and, where appropriate, an addition value.

According to the invention, the ophthalmic lens is manufactured from an optical element made of a first material having a first refractive index by modifying the refractive index with focused femtosecond laser pulses so as to obtain the ophthalmic lens having the desired optical function.

Advantageously, the ophthalmic lens is manufactured according to a method of manufacturing according to the invention and as described hereinafter and/or by an apparatus for manufacturing an ophthalmic lens according to another aspect of the invention.

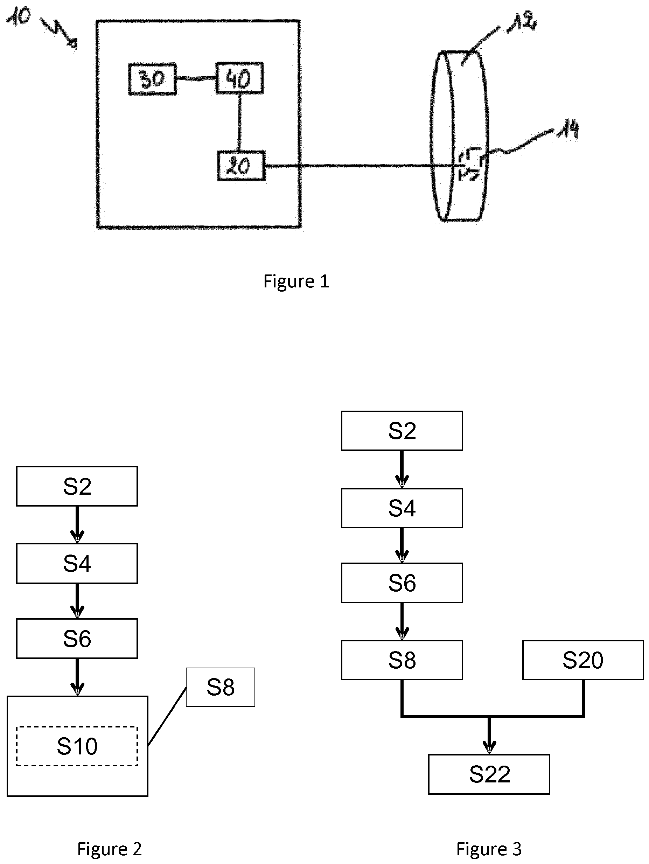

Such an apparatus for manufacturing an ophthalmic lens will now be detailed with reference to figure 1.

According to the invention, the apparatus 10 comprises at least means for providing an optical element 12 intended to be modified to manufacture the ophthalmic lens. The optical element 12 is made of a first material having a first refractive index.

The apparatus 10 further comprises at least means for providing data relative to the modification of the optical element 12 enabling to obtain the desired optical function.

Moreover, the apparatus comprises at least means for determining at least one zone 14 in the first material based on data. The at least one zone 14 is a volumic zone and can be a part of the optical element 12 or the optical element 12 entirely.

The apparatus 10 further comprises at least means for modifying the refractive index of the first material in the determined zone 14 with focused femtosecond laser pulses according to data so as to obtain an ophthalmic lens having the desired optical function.

The apparatus 10 also comprises means 20 for illuminating the optical element 12 and so configured to emit focused femtosecond laser pulses inside the optical element in the determined zone.

Preferably, the wavelength of the femtosecond laser pulses is comprised between 500 nm and 550 nm, preferably between 510 nm and 520 nm, advantageously equal to 515 nm.

For example, the femtosecond laser delivers pulses with a duration of 400 fs, at a repetition rate ranging from 500 kHz to 2 MHz, and with a maximum energy of 8 $\mu$J per pulse. An external modulator (comprised in the laser) reduces the laser repetition rate up to 1 kHz. The initial wavelength of the laser beam is, for example, equal to 1030 nm. A doubler-tripler module placed at the output of the laser makes it possible to emit laser pulses at 515 nm.

Furthermore, the size of the focused femtosecond laser pulses is preferably comprised between 0.5 $\mu$m and 1.5 $\mu$m.

Advantageously, the apparatus 10 is adapted to implement a method of manufacturing according to the invention and detailed hereinafter.

For example, the apparatus 10 comprises a memory 30 and a processor 40.

The memory 30 is adapted to store one or more sequences of instructions that are accessible to the processor 40 and which, when executed by the processor, causes the processor to carry out at least the following steps:

- providing the optical element 12,
- providing data relative to the modification of the optical element 12 enabling to obtain the desired optical function,
- determining at least one zone 14 in the first material based on data, and
- controlling a femtosecond laser 20 for modifying the refractive index of the first material in the determined zone 14 with focused femtosecond laser pulses according to data so as to obtain an ophthalmic lens having the desired optical function.

As represented on figure 2, the invention further relates to a method for manufacturing an ophthalmic lens intended to be placed in front of an eye of a wearer. As indicated hereinbefore, the ophthalmic lens has a desired optical function comprising a dioptric function adapted to a prescription of the wearer.

The method comprises:

- an optical element providing step S2;
- a modification data providing step S4;
- a zone determining step S6; and
- a refractive index modifying step S8.

During the optical element providing step S2, an optical element intended to be modified to manufacture the ophthalmic lens is provided. The optical element is made of a first material having a first refractive index.

During the modification data providing step S4, data relative to the modification of the optical element enabling to obtain the desired optical function are provided.

Preferably, the data comprise:

- data relative to variation of spherical, cylinder and/or prismatic power to be applied to the optical element, and/or
- data relative to variation of the optical design to be applied to the optical element, and/or
- data relative to an additional dioptric function to be applied to the optical element.

Then, at least one zone in the first material is determined based on data during the zone determining step S6.

During the refractive index modifying step S8, the refractive index of the first material is modified in the determined zone with focused femtosecond laser pulses according to data so as to obtain an ophthalmic lens having the desired optical function.

Advantageously, the wavelength of the femtosecond laser pulses is comprised between 500 nm and 550 nm, preferably between 510 nm and 520 nm, advantageously equal to 515 nm.

For example, the femtosecond laser delivers pulses with a duration of 400 fs, at a repetition rate ranging from 500 kHz to 2 MHz, and with a maximum energy of 8 $\mu$J per pulse. An external modulator (comprised in the laser) reduces the laser repetition rate up to 1 kHz. The initial wavelength of the laser beam is, for example, equal to 1030 nm. A doubler-tripler module placed at the output of the laser makes it possible to emit laser pulses at 515 nm.

Furthermore, the size of the focused femtosecond laser pulses is comprised between 0,5 $\mu$m and 1,5 $\mu$m.

For example, the refractive index is modified as a function of the energy of the pulses of the femtosecond laser. Table 1 gives an example of the difference of refractive index $\Delta$n of the first material after and before the irradiation, as a function of the energy E of the pulses in nanojoules (nJ).

Table 1

| E (nJ) | $\Delta$n |
|--------|-----------|
| 20 | -0,002 |
| 76 | -0,009 |
| 138 | -0,009 |
| 190 | -0,014 |
| 250 | -0,014 |

Preferably, the modifying step S8 comprises a pattern forming step S10, wherein a pattern is formed in the determined zone of the first material by the focusing of the femtosecond laser pulses in the determined zone.

For example, the pattern comprises superimposed Fresnel layers.

According to another example, the pattern can comprise an interferential element, preferably an antireflective coating or a reflective coating or an hologram or an optical waveguide.

According to a preferred embodiment of the invention, the optical element 12 is an initial ophthalmic lens having an initial optical function adapted to a previous prescription of the wearer.

In this embodiment, the refractive index of the first material is further modified so as to obtain an ophthalmic lens having the desired optical function adapted to the current prescription of the wearer.

Thus, the optical function of the initial ophthalmic lens can be updated based on the updated current prescription of the wearer thanks to the invention.

According to this embodiment, the method preferably further comprises:

- measuring the optical element 12 ;
- determining data relative to the modification of the optical element enabling to obtain the desired optical function based at least on the measurement so as to obtain an ophthalmic lens having a dioptric function adapted to the current prescription.

In the sense of the invention, having a dioptric function adapted to the current prescription means that the difference between the measured optical power at a reference point in the determined zone and the prescribed optical power is smaller or equal to 0.25D.

During the step for determining the optical element, i.e. the initial ophthalmic lens, optical parameters can be provided or measured. Optical parameter may be defined as a parameter that may be calculated by ray tracing through the ophthalmic lens, such as power profile of the meridian, widths of iso power or astigmatism lines fields, power or astigmatism gradients, wavefront, optical flow, retinal flow, deviation maps....

For example, the optical element 12 is a semi-finished lens blank or a lens blank comprising a front face and a back face opposed to the front face. The back face is the face intended to be the closest to the wearer's eye when the ophthalmic lens is placed in front of the wearer's eye.

Advantageously, the femtosecond laser pulses are focused in the determined zone 14 through the front face of the optical element 12 during the modifying step S8.

As indicated hereinbefore, the determined zone is preferably a tridimensional zone defining a plurality of layers wherein the refractive index is modified during the modifying step. Each layer is substantially parallel to the front face and localized at an average distance from the front face. The refractive index of the first material in the determined zone is advantageously successively modified with focused femtosecond laser pulses from the most distant layers of the front face to the least distant layers of the front face during the modification step S8.

According to another preferred embodiment of the invention, the optical element 12 is an ophthalmic lens made of a substrate and of a HMC (Hardened and Multi Coated) having an optical function adapted to the prescription of the wearer, the HMC providing an anti-reflective function such as for example the "specter RV killer" described in WO2015000534.

In this embodiment, the refractive index of the substrate is modified so as to obtain an ophthalmic lens having an optical function adapted to the prescription of the wearer and having an interferential filter.

According to this embodiment, the method preferably comprises:

- providing the optical element 12 ;
- providing data relative to a wavelength range to filter,

- determining a zone to be modified based on the data,
- forming a pattern in the determined zone by the focusing of the femtosecond laser pulses in the determined zone, the pattern zone comprising multiple layers with different refractive index.

Advantageously, the femtosecond laser pulses are focused in the determined zone 14 through the front face of the optical element 12 during the modifying step S8.

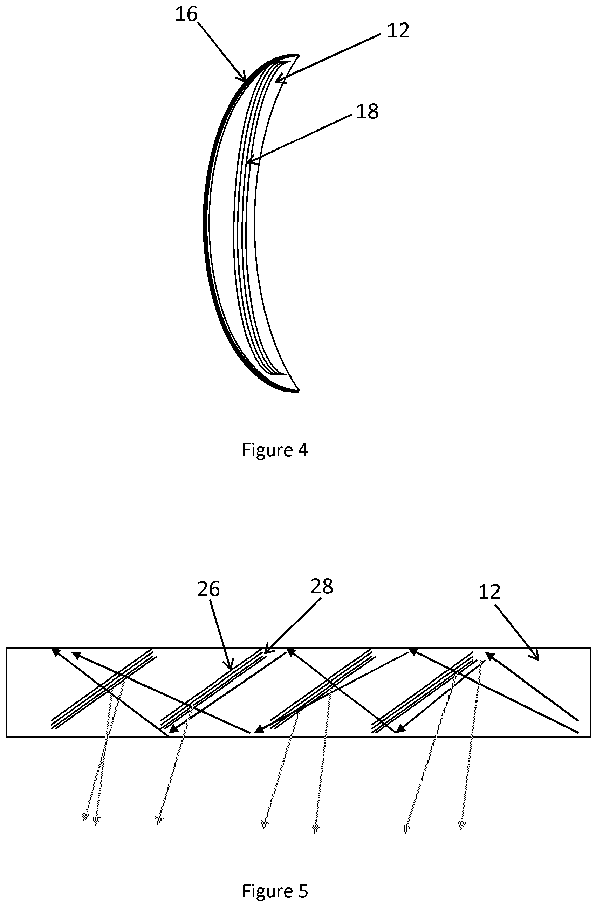

With reference to figure 4, the determined zone is preferably a tridimensional zone defining a plurality of layers wherein the refractive index is alternatively modified for each layer during the modifying step so as to obtain a series of layers with a low refractive index nL interposed with layers with a high refractive index nH.

Such structure formed with multiple layers of alternating refractive index corresponds to a distributed Bragg reflector. For example, a low refractive index layer can be obtained by modifying the refractive index of said layer by using the femtosecond laser and a high refractive level layer by not modifying the refractive index of said layer.

Advantageously the refractive index difference between the high refractive index layer and the low refractive index layer is small, preferably the difference is inferior or equal to 0.03, more preferably the difference is inferior or equal to 0.01.

The thickness of each low refractive index layer of such structure is equal to $\lambda/(4.nL)$, and the thickness of each high refractive index layer is equal to $\lambda/(4.nH)$, where A is the wavelength to be filtered.

The wavelength range $\Delta f0$ filtered by such reflector is defined by the following equation:

$$\frac{\Delta f_0}{f_0} = \frac{4}{\pi} \sin^{-1} \left( \frac{nL - nH}{nL + nH} \right)$$

The reflectivity of such structure formed with multiple layers of alternating refractive index is given by the following equation:

$$R = \left[ \frac{nH(nL)^{2N} - nH(nH)^{2N}}{nH(nL)^{2N} + nH(nH)^{2N}} \right]^2 ,$$ where N is the number of repeated pairs of layers.

Advantageously multiple reflective structures such as distributed Bragg reflector with different filtering wavelength can be defined in the determined zone to increase the filtered range.

As indicated hereinbefore, each layer is substantially parallel to the front face and localized at an average distance from the front face. The refractive index of the material in the determined zone is advantageously successively modified with focused femtosecond laser pulses from the most distant layers of the front face to the least distant layers of the front face during the modification step S8.

According to another preferred embodiment of the invention, the optical element 12 is an ophthalmic lens made of a standard material and having an optical function adapted to the prescription of the wearer.

The standard material may be any organic glass commonly used in the field of optics and in particular in the ophthalmic field for substrates of ophthalmic lenses. It is, for example, composed of a thermoplastic or thermosetting plastic.

Mention may be made, by way of examples, of substrates made of polycarbonate, of polyamide, of polyimide, of polysulfone, of copolymers of poly(ethylene terephthalate) and polycarbonate, of polyolefins, in particular of polynorbornene, of homopolymers and copolymers of diethylene glycol bis(allyl carbonate), of (meth)acrylic polymers and copolymers, in particular (meth)acrylic polymers and copolymers derived from bisphenol A, of thio(meth)acrylic polymers and copolymers, of polyurethane and polythiourethane homopolymers or copolymers, epoxy polymers and copolymers and episulfide polymers and copolymers.

As non-limiting examples, it will be possible to use a diethylene glycol bis(allyl carbonate), such as CR39®, in particular with a refractive index of 1.5, sold by PPG Industries, or else a polythiourethane, such as any of the MR series sold by Mitsui Toatsu, with an example of the MR7® with a refractive index of 1.66, or a polycarbonate, which may be derived from bisphenol A, although it may alternatively be derived from other diols such as 1,1-bis(4-hydroxyphenyl)cyclohexane, dihydroxybenzophenone and tetramethylcyclobutanediol.

Examples of polycarbonates usable for the ophthalmic field and their preparation process are given in US 3 305 520 for instance.

In this embodiment, the refractive index of the substrate is modified so as to provide an optical function permitting vision of virtual image.

According to this embodiment, the method preferably comprises:

- providing the optical element 12 ;
- providing data relative to the modification of the optical element enabling to obtain an optical function permitting vision of virtual images,
- determining a zone to be modified based on the data,
- forming a pattern in the determined zone by the focusing of the femtosecond laser pulses in the determined zone, the pattern zone being comprised in waves guides made of parallel optical plates .

Advantageously, the femtosecond laser pulses are focused in the determined zone 14 through the front face of the optical element 12 during the modifying step S8.

With reference to figure 5, the determined zone is preferably a tridimensional zone defining one optical plate having a refractive index higher than the refractive index of the outside environment.

Advantageously the modified reflective index of the optical plate is equal to 1.6.

Such structure formed by the optical plate having a refractive index higher than the refractive index of the outside environment allows having a full reflexion on the plate surface for light having an incidence higher than:

$$\theta = \sin^{-1}\left(\frac{n_{outside}}{n_{optical\ plate}}\right)$$

For example the pattern structure can be a plurality of distributed Bragg mirrors designed to output light for a chosen specific wavelength.

Advantageously, the pattern forms flat mirrors or curved mirrors, so that virtual image output by Bragg mirror can be seen by the user at a distance depending of the mirrors curvature.

Advantageously, the structure is designed to reflect 3 wavelengths so that virtual images can be RGB images.

According to another preferred embodiment of the invention illustrated on figure 3, the method further comprises:

- a first ophthalmic lens providing step S20; and
- a modified optical element adding step S22.

During the first ophthalmic lens providing step S20, a first ophthalmic lens is provided. The first ophthalmic lens has a first optical function. The first ophthalmic lens comprises a first face and a second face opposed to the first face, the second face being the face intended to be the closest to the wearer's eye when the first ophthalmic lens is placed in front of the wearer's eye.

During the modified optical element adding step S22, the modified optical element is added to the first ophthalmic lens so as to form the ophthalmic lens having a desired optical function adapted to the wearer after the modifying step.

The modified optical element is the optical element wherein the refractive index of the first material in the determined zone is modified with focused femtosecond laser pulses according to data.

For example, the modified optical element is a patch glued on the first ophthalmic lens to form the ophthalmic lens having the desired optical function adapted to a prescription of the wearer.

While the foregoing examples have been described with reference to the manufacture of an ophthalmic lens, it will be appreciated that the method of the invention may be applied more generally to the manufacture of other types of optical lens, for example optical lens used in telescopes and the like, car headlight, micro lenses solar panels...

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1. A method for manufacturing an ophthalmic lens intended to be placed in front of an eye of a wearer, the ophthalmic lens having a desired optical function comprising a dioptric function adapted to a prescription of the wearer, the method comprising:

   - providing an optical element made of a first material having a first refractive index, the optical element being intended to be modified to manufacture the ophthalmic lens,
   - providing data relative to the modification of the optical element enabling to obtain the desired optical function,
   - determining at least one zone in the first material based on data, and
   - modifying the refractive index of the first material in the determined zone with focused femtosecond laser pulses according to data so as to obtain an ophthalmic lens having the desired optical function.

2. The method according to claim 1, wherein the data comprise:

   - data relative to variation of spherical, cylinder and/or prismatic power to be applied to the optical element, and/or
   - data relative to variation of the optical design to be applied to the optical element, and/or
   - data relative to an additional dioptric function to be applied to the optical element.

3. The method according to claim 1 or 2, wherein the modifying step comprises a pattern forming step, wherein a pattern is formed in the determined zone of the first material by the focusing of the femtosecond laser pulses in the determined zone.

4. The method according to claim 3, wherein the pattern comprises superimposed Fresnel layers.

5. The method according to claim 3 or 4, wherein the pattern comprises an interferential element, preferably an antireflective coating or a reflective coating or an hologram or an optical waveguide.

6. The method according to any of the preceding claims 1 to 5, wherein the optical element is an initial ophthalmic lens having an initial optical function adapted to a previous prescription of the wearer and the refractive index of the first material is modified so as to obtain an ophthalmic lens having the desired optical function adapted to the current prescription of the wearer.

7. The method according to claim 6, further comprising:

   - measuring the optical element;
   - determining data relative to the modification of the optical element enabling to obtain the desired optical function based at least on the measurement so as to obtain an ophthalmic lens having a dioptric function adapted to the current prescription.

8. The method according to claim 6 or 7, wherein the optical element is a semi-finished lens blank or a lens blank comprising a front face and a back face opposed to the front face, the back face being the face intended to be the closest to the wearer's eye when the ophthalmic lens is placed in front of the wearer's eye.

9. The method according to the preceding claim 8, wherein during the modifying step, the femtosecond laser pulses are focused in the determined zone through the front face of the optical element.

10. The method according to the preceding claim 9, wherein the determined zone is a tridimensional zone defining a plurality of layers wherein the refractive index is modified during the modifying step, each layer being substantially parallel to the front face and localized at an average distance from the front face, and during the modification step, the refractive index of the first material in the determined zone is successively modified with focused femtosecond laser pulses from the most distant layers of the front face to the least distant layers of the front face.

11. The method according to any of the preceding claims 1 to 10, wherein the wavelength of the femtosecond laser pulses is comprised between 500 nm and 550 nm.

12. The method according to any of the preceding claims 1 to 11, wherein the size of the focused femtosecond laser pulses is comprised between 0,5 $\mu$m and 1,5 $\mu$m.

**13.** The method according to any of the preceding claims 1 to 12, wherein the method further comprises:

- providing a first ophthalmic lens having a first optical function and comprising a first face and a second face opposed to the first face, the second face being the face intended to be the closest to the wearer's eye when the first ophthalmic lens is placed in front of the wearer's eye; and
- after the modifying step, adding the modified optical element to the first ophthalmic lens so as to form the ophthalmic lens having a desired optical function adapted to the wearer;

wherein the modified optical element is the optical element wherein the refractive index of the first material in the determined zone is modified with focused femtosecond laser pulses according to data.

**14.** An ophthalmic lens intended to be placed in front of an eye of a wearer, the ophthalmic lens having a desired optical function comprising a dioptric function adapted to a prescription of the wearer and being manufactured from an optical element made of a first material having a first refractive index by modifying the refractive index with focused femtosecond laser pulses so as to obtain the ophthalmic lens having the desired optical function.

**15.** An apparatus for manufacturing an ophthalmic lens intended to be placed in front of an eye of a wearer, the ophthalmic lens having a desired optical function comprising a dioptric function adapted to a prescription of the wearer, the apparatus comprising:

- means for providing an optical element made of a first material having a first refractive index, the optical element being intended to be modified to manufacture the ophthalmic lens,
- means for providing data relative to the modification of the optical element enabling to obtain the desired optical function,
- means for determining at least one zone in the first material based on data, and
- means for modifying the refractive index of the first material in the determined zone with focused femtosecond laser pulses according to data so as to obtain an ophthalmic lens having the desired optical function.

Figure 1

Figure 2

Figure 3

16

12

18

Figure 4

26    28    12

Figure 5

Europäisches
Patentamt

European
Patent Office

Office européen
des brevets

# EUROPEAN SEARCH REPORT

Application Number

EP 18 30 6678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/229459 A1 (SMATHERS STEVEN EDWARD [US] ET AL) 16 August 2018 (2018-08-16) * paragraphs [0006], [0020], [0021], [0134] - [0135], [0169] - [0187], [0226], [0245] * | 1-6,8-15 | INV. G02C7/02 B29D11/00 B23K26/53 |
| X | US 2014/135920 A1 (SAHLER RUTH [US] ET AL) 15 May 2014 (2014-05-15) * paragraphs [0175] - [0183], [0236] - [0277]; figures 25, 27 * | 1-15 | ADD. G02B5/18 G02C7/10 |
| X | US 2008/001320 A1 (KNOX WAYNE H [US] ET AL) 3 January 2008 (2008-01-03) <br><br> * paragraphs [0008] - [0010] * | 1,3-5, 8-12,14, 15 | |
| X | US 2017/362697 A1 (RICHTER JAN [DE] ET AL) 21 December 2017 (2017-12-21) * paragraphs [0015] - [0019] * | 3-5,8,9, 11,12 | |
| A | WO 2008/003903 A2 (ESSILOR INT [FR]; ROUSSEAU BENJAMIN [FR]) 10 January 2008 (2008-01-10) * page 17, lines 6-14 * | 3-5,13 | **TECHNICAL FIELDS SEARCHED (IPC)** <br> G02C <br> B23K <br> B29D <br> G02B |
| A | YAN LI ET AL: "Permanent computer-generated holograms embedded in silica glass by femtosecond laser pulses", OPTICS EXPRESS, vol. 13, no. 7, 4 April 2005 (2005-04-04), page 2433, XP055595139, US ISSN: 1094-4087, DOI: 10.1364/OPEX.13.002433 * the whole document * | 1-13 | |

The present search report has been drawn up for all claims

| Place of search | Date of completion of the search | Examiner |
|---|---|---|
| Munich | 11 June 2019 | Albero Silvestre, J |

## ANNEX TO THE EUROPEAN SEARCH REPORT
## ON EUROPEAN PATENT APPLICATION NO.

EP 18 30 6678

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2019

| Patent document cited in search report | Publication date | Patent family member(s) | | Publication date |
|---|---|---|---|---|
| US 2018229459 A1 | 16-08-2018 | US | 2018229459 A1 | 16-08-2018 |
| | | WO | 2018152407 A1 | 23-08-2018 |
| US 2014135920 A1 | 15-05-2014 | AU | 2013345322 A1 | 18-06-2015 |
| | | AU | 2016206244 A1 | 04-08-2016 |
| | | AU | 2016206381 A1 | 11-08-2016 |
| | | CA | 2891470 A1 | 22-05-2014 |
| | | CN | 104981340 A | 14-10-2015 |
| | | CN | 105232186 A | 13-01-2016 |
| | | CN | 105380729 A | 09-03-2016 |
| | | EP | 2919975 A1 | 23-09-2015 |
| | | EP | 3040051 A1 | 06-07-2016 |
| | | EP | 3040052 A1 | 06-07-2016 |
| | | ES | 2621167 T3 | 03-07-2017 |
| | | ES | 2621277 T3 | 03-07-2017 |
| | | ES | 2625682 T3 | 20-07-2017 |
| | | HK | 1210741 A1 | 06-05-2016 |
| | | HK | 1214120 A1 | 22-07-2016 |
| | | HK | 1215664 A1 | 09-09-2016 |
| | | JP | 5887030 B2 | 16-03-2016 |
| | | JP | 5969101 B2 | 10-08-2016 |
| | | JP | 2016047649 A | 07-04-2016 |
| | | JP | 2016504431 A | 12-02-2016 |
| | | KR | 20150085025 A | 22-07-2015 |
| | | KR | 20160075778 A | 29-06-2016 |
| | | MX | 344938 B | 12-01-2017 |
| | | US | 2014135920 A1 | 15-05-2014 |
| | | US | 2014239524 A1 | 28-08-2014 |
| | | US | 2014243443 A1 | 28-08-2014 |
| | | US | 2014249516 A1 | 04-09-2014 |
| | | US | 2014288644 A1 | 25-09-2014 |
| | | WO | 2014077983 A1 | 22-05-2014 |
| US 2008001320 A1 | 03-01-2008 | AT | 475389 T | 15-08-2010 |
| | | AU | 2007265218 A1 | 03-01-2008 |
| | | CA | 2655229 A1 | 03-01-2008 |
| | | CN | 101489509 A | 22-07-2009 |
| | | EP | 2032102 A2 | 11-03-2009 |
| | | JP | 5385136 B2 | 08-01-2014 |
| | | JP | 2009542361 A | 03-12-2009 |
| | | KR | 20090024197 A | 06-03-2009 |
| | | US | 2008001320 A1 | 03-01-2008 |
| | | US | 2013178934 A1 | 11-07-2013 |
| | | US | 2018206979 A1 | 26-07-2018 |
| | | WO | 2008002796 A2 | 03-01-2008 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 18 30 6678

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2019

| Patent document cited in search report | | Publication date | Patent family member(s) | | Publication date |
|---|---|---|---|---|---|
| US 2017362697 | A1 | 21-12-2017 | CN | 107206544 A | 26-09-2017 |
| | | | EP | 3250728 A1 | 06-12-2017 |
| | | | US | 2017362697 A1 | 21-12-2017 |
| | | | WO | 2016119915 A1 | 04-08-2016 |
| WO 2008003903 | A2 | 10-01-2008 | EP | 2041614 A2 | 01-04-2009 |
| | | | FR | 2903503 A1 | 11-01-2008 |
| | | | US | 2010045927 A1 | 25-02-2010 |
| | | | WO | 2008003903 A2 | 10-01-2008 |

EPO FORM P0459

For more details about this annex : see Official Journal of the European Patent Office, No. 12/82

**EP 3 667 401 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015000534 A

- US 3305520 A